# EUROPEAN PATENT SPECIFICATION

(11) **EP 1 581 662 B1**
(45) Date of publication and mention of the grant of the patent: **07.03.2007**
(21) Application number: 03769718.2
(22) Date of filing: 29.10.2003
(51) Int. Cl.: C22C 26/00, B22F 7/06, B01J 3/06, B24D 3/06, E21B 10/56

(54) **Process of production of composite material**
Herstellungsverfahren eines Verbundwerkstoffes
PROCEDE DE PRODUCTION DE MATERIAU COMPOSITE

(30) Priority: 29.10.2002 ZA 200208731
(43) Date of publication of application: 05.10.2005
(73) Proprietor: ELEMENT SIX (PTY) LTD, 1559 Springs (ZA)
(72) Inventor: SIGALAS, Iakovos, 2195 Linden (ZA); DAVIES, Geoffrey, John, 2194 Randburg (ZA); MASETE, Mosimanegape, Stephen, 190 Leopard Rock, 2091 Johannesburg (ZA); CHAPMAN, Raymond, Albert, 2001 Johannesburg (ZA)
(74) Representative: Brandon, Paul Laurence
(86) International application number: PCT/IB2003/004788
(87) International publication number: WO 2004/040029

(56) References cited:
- US-A- 4 525 178
- US-A- 4 960 643
- US-A- 5 697 994
- DATABASE WPI Section Ch, Week 200170 Derwent Publications Ltd., London, GB; Class L02, AN 2001-609219 XP002269004 & JP 2001 187431 A (SUMITOMO ELECTRIC IND CO), 10 July 2001 (2001-07-10)

## Description

### BACKGROUND OF THE INVENTION

This invention relates to a method of making the composite material and a method of making a tool component.

Tool components utilising diamond compacts, also known as PCD, and cubic boron nitride compacts, also known as PcBN, are extensively used in drilling, milling, cutting and other such abrasive applications. The tool component will generally comprise a layer of PCD or PcBN bonded to a support, generally a cemented carbide support. The PCD or PcBN layer may present a sharp cutting edge or point or a cutting or abrasive surface.

PCD cutters are well-known and widely used in drill bit technology as the cutting element in drill bits used in core drilling, oil and gas drilling, and other similar applications. Such cutters generally comprise a PCD table formed on a hard metal substrate by a high temperature and high pressure sintering process. The substrate is then either brazed on an elongated support, or is directly brazed in a pocket of the drill bit, in a manner that exposes the PCD table to the surface for cutting.

It is known that PCD cutters inherently have residual stresses due to the mismatch of the properties of PCD to those of the substrate. The relevant properties in this context are the thermal expansion coefficient and the elastic moduli and compressibilities of the two materials. These stresses are particularly pronounced at the interface, but are present mostly throughout the cutter. These stresses tend to be compressive within the PCD layer and tensile within the substrate. However tensile stresses do exist within the PCD layer, particularly in cases where a non-planar interface is used. These stresses can combine with the applied stresses during the rock drilling process and bring about the fracture of the cutter.

Furthermore, such stresses are known to increase in magnitude during the brazing process used to attach the cutter to the drill bit. This increase in stress can cause fracture of the PCD layer or of the substrate, even without the application of an external stress.

Various solutions have been suggested in the art for modifying the residual stresses in PCD cutters in order to avoid such failures. For example, it has been suggested that configuring the diamond table and/or carbide substrate in a particular way may redistribute the stress such that tensile stresses are reduced, as disclosed in U.S. Pat. No. 5,351,772 to Smith, and U.S. Pat. No. 4,255,165 to Dennis. Other cutter configurations, which reduce residual stresses, are disclosed in U.S. Pat. No. 5,049,164 to Horton; U.S. Pat. No. 5,176,720 to Martell et al.; U.S. Pat. No. 5, 304, 342 to Hall; and U.S. Pat. No. 4,398, 952 to Drake. Methods for relieving residual stresses by back-grinding the substrate, annealing, or by varying the properties of the substrate are disclosed in U.S. Pat. No. 6,220,375.

U.S. Pat. No. 4,604,106 to Hall *et al* discloses the use of precemented carbide particles in a PCD matrix in order to introduce a graded interface between the PCD table and the carbide substrate. A similar material is also disclosed in U.S. Pat. No. 4,525,178. Although this approach gives efficient grading of properties, it requires the preparation of carbide particles by crushing, which can be an expensive process. Furthermore such materials are known to chip, because the random disposition of the precemented carbide particles in the PCD matrix carries with it the possibility of various agglomerates forming in the body of the material, thus increasing its flaw size, and consequently reducing its strength.

U.S. Pat. No. 5,370,195 discloses drill bit inserts comprising a number of layers positioned between the substrate and the outer PCD layer. These intermediate layers are essentially diamond-carbide composites. Each composite is made out of individual diamond crystals mixed with tungsten carbide, or titanium carbide, or titanium carbonitride particles. Such materials are useful in managing the residual stresses in the drill bit inserts, but possess inferior strength and toughness, due to the poor adhesion of the diamond particles to the binder phases used.

Use of interfaces as a means of managing the residual stresses in a PCD cutter requires that the interface material has good wear resistance, that would be equal or slightly inferior to that of the PCD layer, and equal or better than that of the carbide substrate. This arrangement would ensure that during the cutting action a lip is formed below the PCD table, allowing for the concentration of stress at the cutting point, thus ensuring fracture of the rock being cut. If the wear resistance of the interlayer was less than that of the carbide support, the wear of the interlayer would be excessive, the PCD lip would loose support during the cutting action, and it would break. If the wear resistance of the interlayer is too high, the lip that develops in use is too shallow and the cutting action is not substantially improved. If the wear resistance of the interlayer is too low, the lip that develops is too deep and the PCD layer is not afforded sufficient support and the cutting edge fails prematurely. Therefore, there is an optimum relationship between the wear resistance of the PCD, the interlayer and that of the substrate.

U.K. Pat. No. 2, 326, 655 discloses the use of PCD granules in a carbide skin. These granules are then used to make a material that has good wear resistance and toughness, which is suitable as a wear part or as an interface material. Such a material relies on the tensile stresses generated in the carbide phase to cause cracking to run through this phase, thus improving this material's fracture toughness. In order to ensure that the crack does indeed run through the carbide phase, the grade chosen is fine grained and relatively brittle. Thus, no major improvement in toughness can be attained.

US-A-331 6073 discloses the production of pellets comprising WC, diamond and binders.

### SUMMARY OF THE INVENTION

The invention is defined in claim 1, the appended claims covering preferred embodiments.

The coated cores are typically provided as granules coated with the components for making a PCD or PcBN material and the binder.

The granules may be further coated with a second coating comprising material selected from the group comprising carbides, nitrides, carbonitrides, cemented carbides, cemented nitrides, cemented carbonitrides, and mixtures thereof, or the components for making an ultra-hard material of a different grade to that of the first coating.

The composite may be a moulded composite which takes on the shape of the surface of the substrate on which it is placed and/or the shape of a surface of the a PCD or PcBN material layer. In this regard, the composite may be pre-cast in the appropriate form or, alternatively, moulded *in situ*.

The composite material typically takes on a honeycomb structure of a hard material and cores within the pores of the honeycomb structure bonded to the honeycomb structure. The pores of the honeycomb structure may be ordered or random.

The components necessary to produce an an ultra-hard PCD or PcBN material may comprise a mass of ultra-hard abrasive particles and optionally a second phase comprising a solvent/catalyst or a precursor to a solvent/catalyst, in particulate form, for the ultra-hard abrasive particle. Such components may include the superalloys, such as the Nimonic® and Stellite® alloys, and high temperature brazes.

The sintering conditions in step (iv) or step (v), as the case may be, are such that the ultra-hard abrasive particles are crystallographically stable.

The particles in the core and, where appropriate, in the coating, are provided in a suitable binder such as an organic binder. This binder will preferably be removed prior to the sintering of step (iv) or (v). Examples of suitable binders include but are not limited to camphor, methyl cellulose and polyethylene glycol.

The plurality of granules may be consolidated by applying pressure to the granules, for example, in a confined space such as a die. The consolidated composite is a green state product which has coherency, but which may also be severed, for example, by cutting. A piece which may be severed and removed from the consolidated or coherent composite has flexibility and may be applied to surfaces which are flat or profiled, e.g. a curved surface. The die for consolidating the granules may be provided with one or both punches profiled such that the green state product has at least one surface that has a shape complementary to the substrate upon which it is to be placed. In this case, the composite layer presents a working surface or a cutting edge. The other surface thereof may also be profiled to accommodate a further layer such as an ultra-hard material layer or another layer of a similar composite material but of a different composition, for instance in terms of the ultra-hard material content or in the grade of the ultra-hard material, presenting a working surface or cutting edge. In this case, the composite material provides an interlayer between the substrate and the cutting layer. In order to provide for a grading of properties, several interlayers of composite material having different compositions may be provided.

Where the cores of the composite material are formed from carbide particles, these will typically be tungsten carbide particles, titanium carbide particles, tantalum carbide particles or molybdenum carbide particles. The metal binder may be any metal binder known in the art such as iron, nickel, cobalt or an alloy containing one or more of these metals.

The substrate will typically be a cemented carbide substrate.

The granules may be produced by providing a core and then coating the core with an ultra-hard material in the presence of an organic binder. Coating may take place by fluidising the cores and spraying the coating thereon or by pelletising in a pan.

### BRIEF DESCRIPTION OF THE DRAWINGS

The invention will now be described in more detail, by way of example only, with reference to the accompanying drawings in which:
- **Figure 1**: is a cross section through a granule used in making a composite material of the invention;
- **Figures 2 & 3**: illustrate schematically the consolidation of granules to form a composite material of the invention;
- **Figure 4**: is a cross-section through an alternative granule for making a composite material of the invention;
- **Figure 5**: is an exploded cross-section through a tool component of the invention;

- **Figure 6**: is a photograph of irregular coated granules of the invention;
- **Figure 7**: is a photograph of a composite material of the invention comprising WC granules dispersed in a diamond matrix;
- **Figure 8**: is a SEM of a composite material of the invention comprising WC granules dispersed in a diamond matrix;
- **Figure 9**: is a photograph of a first embodiment of a tool component of the invention;
- **Figure 10**: is a photograph of a cross-section through the tool component of Figure 9;
- **Figure 11**: is a photograph of a second embodiment of a tool component of the invention;
- **Figure 12**: is a photograph of a cross-section through the tool component of Figure 11; and
- **Figure 13 & 14**: are photographs of spherical coated granules of the invention.

### DESCRIPTION OF EMBODIMENTS

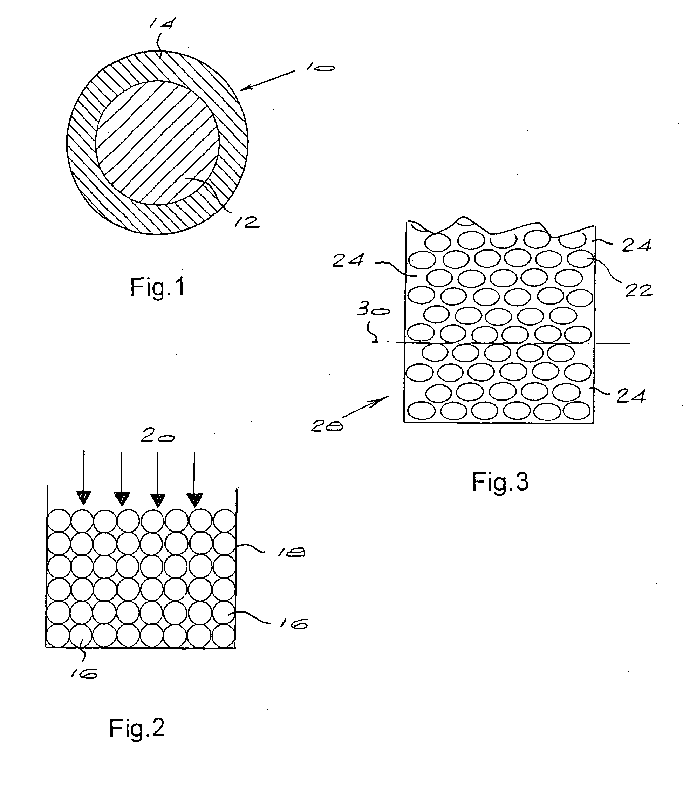

Referring to Figure 1, a granule 10 comprises a core 12 and a coating 14 substantially enclosing the core 12. The granule 10 illustrated is of uniform shape and spherical. The granule does not have to be of such uniform shape, nor need it be spherical. Other shapes are possible. For convenience, this embodiment of the invention will be described with reference to carbide particles. It is to be understood, however, that the cores can comprise other core material selected from the group comprising nitrides, carbonitrides, cemented carbides, cemented nitrides, cemented carbonitrides and mixtures thereof.

The core 12 comprises a mixture of carbide particles and binder metal in particulate form.

The coating 14 comprises ultra-hard abrasive particles such as diamond or cubic boron nitride and optionally a metal or precursor in particulate form. Such metal may be a solvent/catalyst or another metal which will sinter under the applied conditions of temperature and pressure.

An organic binder such as methyl cellulose is present in both the core 12 and the coating 14 and provides both the core 12 and the coating 14 and the granule 10 as a whole with coherency. Other non-limiting examples of the organic binder include camphor and polyethylene glycol.

A plurality of the granules 16, as illustrated by Figure 2, are placed in a container 18. Pressure in the direction of the arrows 20 is applied to the granules 16 causing them to consolidate into a composite material as illustrated by Figure 3. The composite material comprises a plurality of cores 22 in what is now a matrix 24 produced from the coatings 14. Although so-called uniaxial compression is described in this embodiment pressure may be applied from above and below the granules 16 or isostatically.

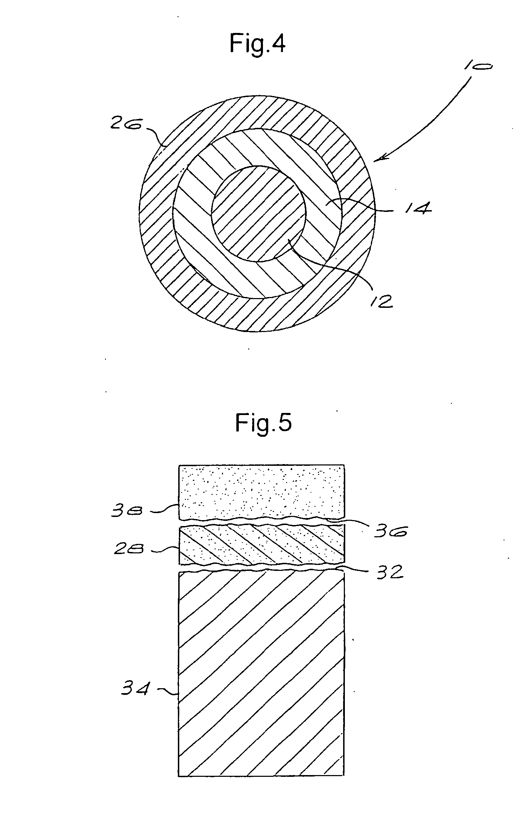

In an alternative embodiment of the invention, as shown in Figure 4, the granule 10 includes a second coating 26 substantially covering the coating 14. The coating 26 can be formed from the same material as the core 12, or it can be made of the same material as the coating 14, but of a different grade in order to allow for a grading of properties.

A layer or portion 28 of the composite material is severed along line 30, as shown in Figure 3, and removed from the composite material.

The portion or layer 28 has flexibility and may be placed on the surface 32, in this case an irregular surface, of a substrate 34, preferably a cemented carbide substrate, or between the surface 32 of the substrate 34 and a surface 36, in this case an irregular surface, of an abrasive layer 38, as shown in Figure 5.

The green state product of Figure 5 is placed in a suitable capsule for insertion into the reaction zone of a conventional high temperature/high pressure apparatus. The organic binder is first removed by heating the capsule to drive off the binder. The capsule is then placed in the reaction zone and the contents of the capsule subjected to conditions of elevated temperature and pressure such that the ultra-hard abrasive is not degraded. Such conditions may be those at which the ultra-hard abrasive is crystallographically stable. This has the effect of producing cemented carbide out of the material of core 10 and an abrasive compact out of the material of coating 14. The abrasive compact will be bonded to the cemented carbide. The layer 28 will be bonded to the surface 32 of the substrate 34 and the surface 36 of the abrasive compact 38 producing a tool component.

Although the use of coated granules to form the composite material is preferred, any appropriate method may be used, such as mixing the various components, provided the cores are dispersed in the resultant matrix and do not form agglomerates.

The tool components of the invention can be used in a wide range of applications, but find particular application in drill bit applications, typically in roller cone bits and drag bits.

The composite material manufactured in accordance with the invention has several advantages over the prior art materials described earlier. The carbide cores are bonded to the PCD matrix via a strong mechanical keying arrangement, thus overcoming the problem of weak bonding of individual diamond particles to a cobalt matrix. Due to the properties mismatch between carbide and PCD, the carbide cores will be in a state of tension, while the PCD matrix will be in compression. The compressive stresses experienced by the PCD continuous matrix will increase the strength of the resulting material, compared to the strength of conventional PCD material. The carbide cores will be in tension. Cracks propagating through this material will be attracted to these regions. If the carbide grade used is a particularly tough one, then the propagation of this crack through this phase will be energetically costly. Thus crack propagation within the resulting material will be more difficult than it would be within conventional PCD. By using granules to create the composite carbide - PCD material, the danger of generating agglomerates of the carbide phase, or very large continuous fillets of PCD, are largely avoided. This allows for a tighter control of the defect size in such materials, thus ensuring more reproducible properties for them.

The combination of these advantages provides a material with good toughness, strength and wear resistance. These critical properties can be tailored to lie between those of substrate and PCD. By varying the grade of PCD as well as the volume fraction of this component in the composite cermet, both the wear resistance, as well as the elastic properties and the thermal expansion coefficient of the resulting composite can be varied to suit the purpose of a particular drill insert design.

Where the composite material of the invention is used as an interlayer, it allows for the production of tool components with much thicker PCD layers, due to the reduced stresses at the interface between the PCD layer and the intermediate layer as compared to the much higher stresses at the interface between the PCD layer and the substrate of a conventional tool component.

The invention will now be described further with reference to the following non-limiting examples.

### Example 1

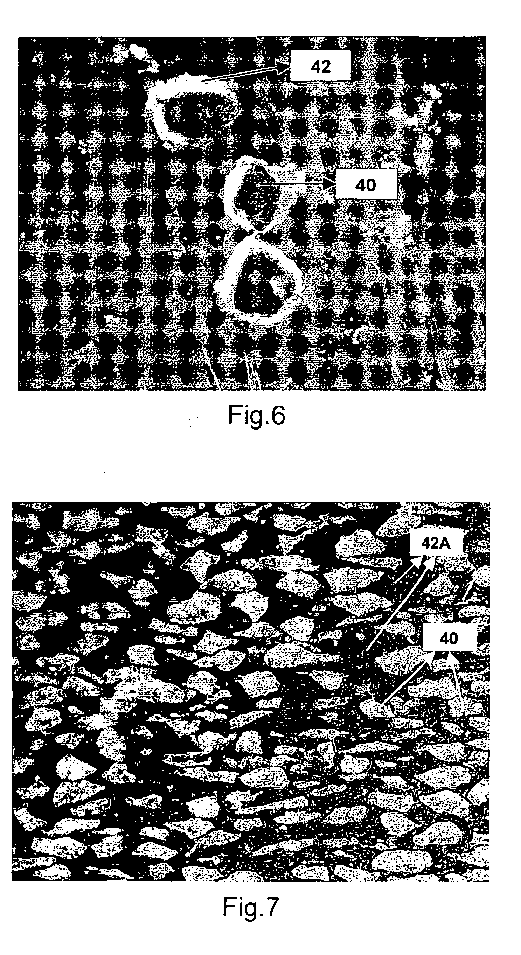

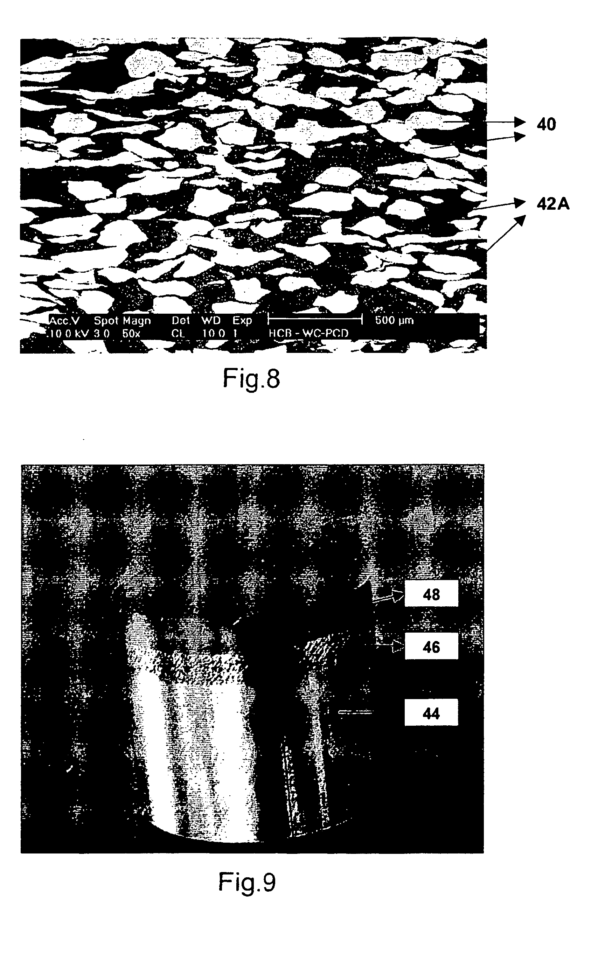

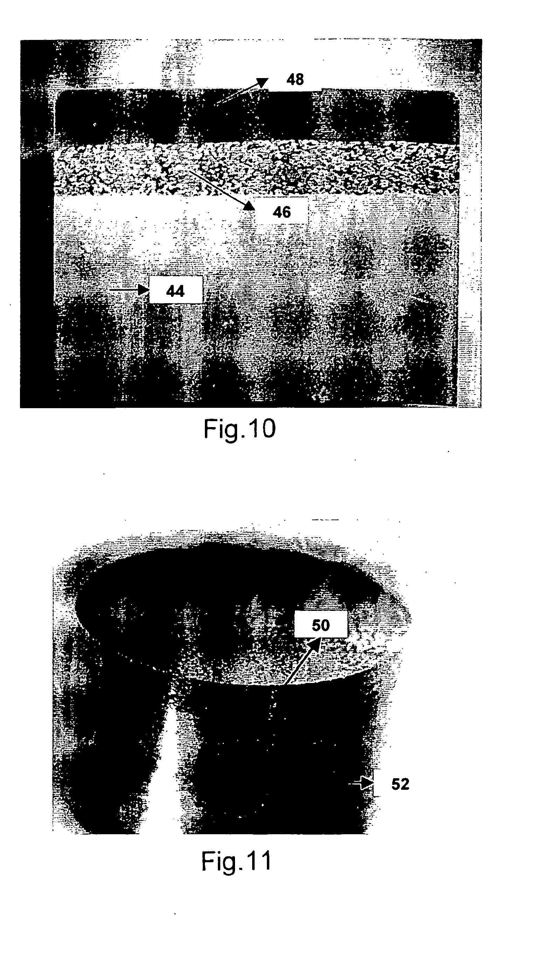

A solvent based slurry of tungsten carbide powder was prepared with approximately 5 wt% organic binder. The WC powder was of the size 0 to 5 microns and contained 11% cobalt. The slurry was dried and crushed with pestle and mortar to produce green WC particles screened to about 200 to 300 microns in size. The granules were placed into a pan granulator and rolled while small additions of 2 micron diamond powder with an organic binder was added to effect coating. Volume % of WC granules to diamond coating was in the ratio of 1:1. The coated WC particles are depicted in Figure 6, where 40 is a WC core and 42 the diamond coating. The coated green granules were placed into a die and pressed into a compact. The compact is depicted in the photograph of Figure 7 and the SEM picture of Figure 8, with the cores 40 now dispersed in a diamond matrix 42A formed from the diamond coatings 42. The compact was placed in a reaction cell containing a diamond powder bed and covered with a WC/Co substrate in order to produce a unit with an interlayer of coated WC granules. The compact was outgassed in a furnace and loaded into a reaction capsule for high temperature high pressure treatment. The resultant pressed compact was processed, characterised and wear tested and was found to have good toughness, strength and wear resistance. The resultant interlayered tool component is shown in the photograph of Figure 9 and in cross-section in the photograph of Figure 10, where 44 is the WC substrate, 46 the WC/PCD granule interlayer and 48 the PCD table.

### Example 2

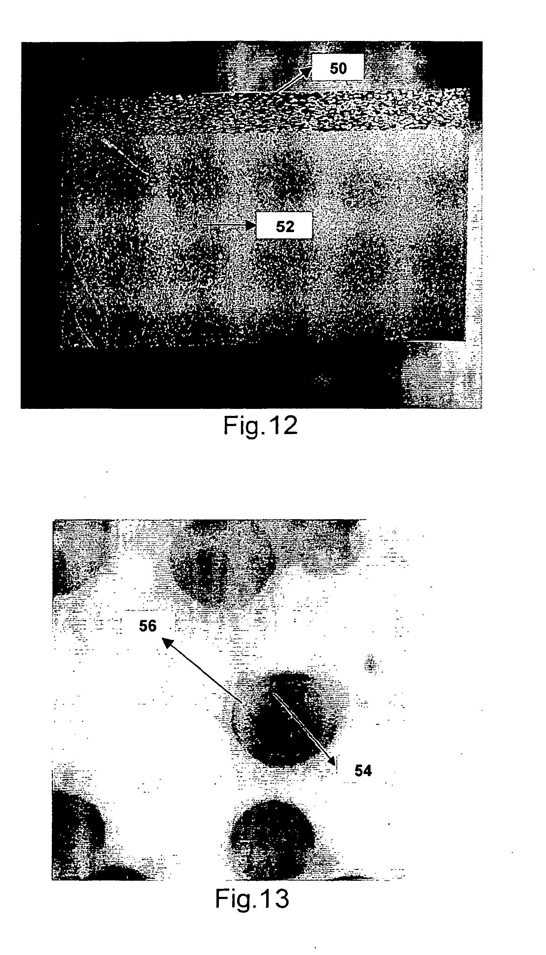

The same procedure as in Example 1 was followed except that the granule compact was not placed over a diamond powder bed. The resultant tool had a WC/PCD cutting table 50 on a WC substrate 52, as shown in the photograph of Figure 11 and in cross-section in the photograph of Figure 12.

### Example 3

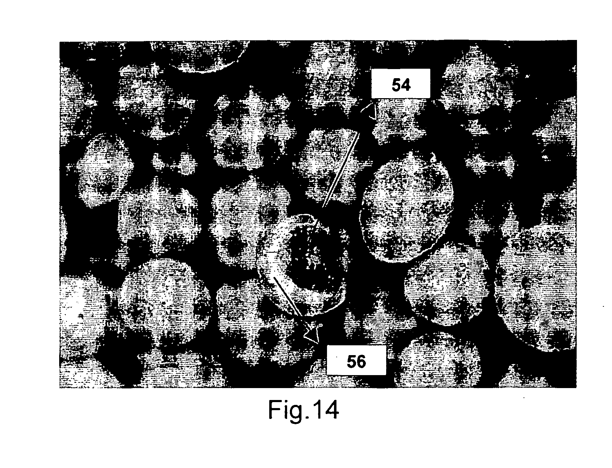

In Example 1, the WC granule shape was uncontrolled leading to irregular shaped granules. As granules can be of any shape, the WC granules of Example 3 were made spherical before coating with diamond powder. The spherical shapes were achieved by rolling irregular shaped granules in a granulator with additions of WC powder to coat them. The granules were then sieved to achieve 200 to 300 micron sized pellets. These granules were then coated with diamond powder and a compact was pressed as in Example 1. The coated diamond granules are depicted in the photographs of Figures 13 and 14, showing the WC granules 54 and the diamond coatings 56.

## Claims

1. A method of producing a coherent green state composite material including the steps of:
(i) providing a plurality of cores of material selected from a group comprising carbides, nitrides, carbonitrides, cemented carbides, cemented nitrides, cemented carbonitrides and mixtures thereof;
(ii) coating the cores with a source of the components for making a PCD or PcBN material and a suitable binder; and
(iii) consolidating the coated cores to produce a coherent green state composite material in which the cores are dispersed in a matrix formed from the components and the binder.

2. A method according to claim 1, wherein the suitable binder is an organic binder.

3. A method according to claim 2, wherein the organic binder is selected from the group comprising camphor, methyl cellulose and polyethylene glycol.

4. A method according to any one of claims 1 to 3, wherein the components for making the PCD or PcBN material comprises a mass of ultra-hard abrasive particles and optionally a second phase comprising a solvent/catalyst or a precursor to a solvent/catalyst, in particulate form, for the ultra-hard abrasive particles.

5. A method of producing a tool component including the steps of:
(i) providing a substrate;
(ii) providing according to the method of any one of claims 1 to 4 a coherent green state composite material,
(iii) placing a layer of the coherent green state composite material on a surface of the substrate to produce an unbonded component; and
(iv) subjecting the unbonded component to conditions of elevated temperature and pressure suitable to produce a PCD or PcBN material.

6. A method according to claim 5, wherein the coherent green state composite material in step (ii) or the layer of step (iii) is consolidated to form a consolidated layer before carrying out step (iv).

7. A method according to claim 6, wherein the binder is removed from the consolidated layer before carrying out step (iv).

8. A method of producing a tool component including the steps of:
(i) providing a substrate;
(ii) providing according to the method of any one of claims 1 to 4 a coherent green state composite material;
(iii) placing a layer of the coherent green state composite material on a surface of the substrate;
(iv) placing a layer of the components for making a PCD or PcBN material on the layer of composite material to produce an unbonded component; and
(v) subjecting the unbonded component to conditions of elevated temperature and pressure to produce a PCD or PcBN material from the components.

9. A method according to any one of claims 5 to 8, wherein the coated cores are provided as granules coated with the components for making the PCD or PcDN material and the binder.

10. A method according to claim 9, wherein the granules are further coated with a second coating comprising material selected from the group comprising carbides, nitrides, carbonitrides, cemented carbides, cemented nitrides, cemented carbonitrides, and mixtures thereof, or the components for making an ultra-hard material of a different grade to that of the first coating.

## Patentansprüche

1. Verfahren zur Herstellung von einem im Grünzustand befindlichen, kohärenten Verbundwerkstoff, folgende Schritte umfassend:
(i) Bereitstellen von mehreren Kernstücken aus einem Werkstoff ausgewählt aus der Gruppe bestehend aus Carbiden, Nitriden, Carbonitriden, zementierten Carbiden, zementierten Nitriden, zementierten Carbonitriden und deren Mischungen,
(ii) Beschichten der Kernstücke mit einer Quelle für Komponenten zur Erzeugung eines PKD- oder PKB-Werkstoffs sowie mit einem geeigneten Bindemittel und
(iii) Verfestigen der beschichteten Kernstücke zur Herstellung eines im Grünzustand befindlichen, kohärenten Verbundwerkstoffs, wobei die Kernstücke in einer Matrix verteilt sind, die aus den Komponenten und dem Bindemittel gebildet wird.

2. Verfahren gemäß Anspruch 1, worin es sich bei dem geeigneten Bindemittel um ein organisches Bindemittel handelt.

3. Verfahren gemäß Anspruch 2, worin das organische Bindemittel aus der Gruppe bestehend aus Campher, Methylcellulose und Polyethylenglykol ausgewählt ist.

4. Verfahren gemäß einem der Ansprüche 1 bis 3, worin die Komponenten zur Erzeugung eines PKD- oder PKB-Werkstoffs eine Masse aus ultraharten Schleifmittelpartikel sowie gegebenenfalls eine zweite Phase umfassen, die ein(en) für die ultraharten Schleifmittelpartikel geeignetes/n Lösemittel/Katalysator oder eine Vorläufersubstanz für ein(en) Lösemittel/Katalysator in Partikelform umfasst.

5. Verfahren zur Herstellung eines Werkzeugbauteils, welches die folgenden Schritte umfasst:
(i) Bereitstellen eines Substrats,
(ii) Bereitstellen eines im Grünzustand befindlichen, kohärenten Verbundwerkstoffs gemäß dem Verfahren nach einem der Ansprüche 1 bis 4,
(iii) Aufbringen einer Schicht aus dem im Grünzustand befindlichen Verbundstoff auf das Substrat, sodass ein Bauteil ohne Bindung entsteht, und
(iv) Einwirkenlassen von Bedingungen erhöhter Temperatur und erhöhten Drucks, die dazu geeignet sind, einen PKD- oder PKB-Werkstoff zu erzeugen, auf das Bauteil ohne Bindung.

6. Verfahren gemäß Anspruch 5, worin der im Grünzustand befindliche, kohärente Verbundwerkstoff gemäß Schritt (ii) oder die Schicht gemäß Schritt (iii) verfestigt wird, um vor dem Ausführen von Schritt (iv) eine verfestigte Schicht zu bilden.

7. Verfahren gemäß Anspruch 6, worin das Bindemittel aus der verfestigten Schicht entfernt wird, bevor Schritt (iv) ausgeführt wird.

8. Verfahren zur Herstellung eines Werkzeugbauteils, welches die folgenden Schritte umfasst:
(i) Bereitstellen eines Substrats,
(ii) Bereitstellen eines im Grünzustand befindlichen, kohärenten Verbundwerkstoffs gemäß dem Verfahren nach einem der Ansprüche 1 bis 4,
(iii) Aufbringen einer Schicht aus dem im Grünzustand befindlichen, kohärenten Verbundwerkstoff auf die Oberfläche des Substrats,
(iv) Aufbringen einer Schicht aus den Komponenten zur Erzeugung eines PKD- oder PKB-Werkstoffs auf die Schicht aus dem Verbundwerkstoff, sodass ein Bauteil ohne Bindung entsteht und
(v) Einwirkenlassen von Bedingungen erhöhter Temperatur und erhöhten Drucks auf das Bauteil ohne Bindung, um einen PKD- oder PKB-Werkstoff zu erzeugen.

9. Verfahren gemäß einem der Ansprüche 5 bis 8, worin die beschichteten Kernstücke in Form von Körnchen bereitgestellt werden, welche mit den Komponenten zur Erzeugung eines PKD- oder PKB-Werkstoffs sowie mit dem Bindemittel beschichtet sind.

10. Verfahren gemäß Anspruch 9, worin die Körnchen darüber hinaus mit einer zweiten Beschichtung versehen werden, die einen Werkstoff ausgewählt aus der Gruppe bestehend aus Carbiden, Nitriden, Carbonitriden, zementierten Carbiden, zementierten Nitriden, zementierten Carbonitriden und deren Mischungen oder aber Komponenten zur Erzeugung eines ultraharten Werkstoffs von einer Güteklasse umfasst, die sich von derjenigen der ersten Beschichtung unterscheidet.

## Revendications

1. Procédé de production d'un matériau composite à l'état vert cohérent comprenant les étapes consistant à :
(i) fournir une pluralité de noyaux d'un matériau choisi dans un groupe comprenant les carbures, les nitrures, les carbonitrures, les carbures cémentés, les nitrures cémentés, les carbonitrures cémentés et des mélanges de ceux-ci ;
(ii) enduire les noyaux avec une source de composants destinés à fabriquer un matériau PCD ou PcBN et un liant approprié ; et
(iii) consolider les noyaux enduits pour produire un matériau composite à l'état vert cohérent dans lequel les noyaux sont dispersés dans une matrice formée des composants et du liant.

2. Procédé selon la revendication 1, dans lequel le liant approprié est un liant organique.

3. Procédé selon la revendication 2, dans lequel le liant organique est choisi parmi le groupe comprenant le camphre, la métyl cellulose et le polyéthylène glycol.

4. Procédé selon l'une quelconque des revendications 1 à 3, dans lequel les composants destinés à fabriquer le matériau PCD ou PcBN comprennent une masse de particules abrasives ultra-dures et éventuellement une seconde phase comprenant un solvant / catalyseur ou un précurseur d'un solvant / catalyseur, sous forme particulaire, pour les particules abrasives ultra-dures.

5. Procédé de production d'un composant d'outil comprenant les étapes consistant à :
(i) fournir un substrat ;
(ii) fournir selon le procédé de l'une quelconque des revendications 1 à 4 un matériau composite à l'état vert cohérent;
(iii) placer une couche du matériau composite à l'état vert cohérent à la surface du substrat pour produire un composant non lié ; et
(iv) soumettre le composant non lié à des conditions de température et de pression élevées appropriées pour produire un matériau PCD ou PcBN.

6. Procédé selon la revendication 5, dans lequel le matériau composite à l'état vert cohérent dans l'étape (ii) ou la couche de l'étape (iii) est consolidé pour former une couche consolidée avant d'effectuer l'étape (iv).

7. Procédé selon la revendication 6, dans lequel le liant est enlevé de la couche consolidée avant d'effectuer l'étape (iv).

8. Procédé de production d'un composant d'outil comprenant les étapes consistant à :
(i) fournir un substrat ;
(ii) fournir selon le procédé de l'une quelconque des revendications 1 à 4 un matériau composite à l'état vert cohérent ;
(iii) placer une couche du matériau composite à l'état vert cohérent à la surface du substrat ;
(iv) placer une couche des composants destinés à fabriquer un matériau PCD ou PcBN sur la couche de matériau composite pour produire un composant non lié ; et
(v) soumettre le composant non lié à des conditions de température et de pression élevées pour produire un matériau PCD ou PcBN à partir des composants.

9. Procédé selon l'une quelconque des revendications 5 à 8, dans lequel les noyaux enduits sont fournis sous forme de granulés enduits avec les composants destinés à fabriquer le matériau PCD ou PcBN et le liant.

10. Procédé selon la revendication 9, dans lequel les granulés sont en outre enduits avec un second revêtement comprenant un matériau choisi dans le groupe comprenant les carbures, les nitrures, les carbonitrures, les carbures cémentés, les nitrures cémentés, les carbonitrures cémentés, et des mélanges de ceux-ci, ou les composants destinés à fabriquer un matériau ultra-dur d'une qualité différente de celle du premier revêtement.
